# EUROPEAN PATENT SPECIFICATION

(11) **EP 1 642 812 B1**
(45) Date of publication and mention of the grant of the patent: **03.07.2013**
(21) Application number: 05020712.5
(22) Date of filing: 22.09.2005
(51) Int. Cl.: B62J 99/00

(54) **Small vehicle with a communication means arrangement structure**
Kleines Fahrzeug mit einer Kommunikationsanlage
Petit véhicule avec un système de communication

(30) Priority: 30.09.2004 JP 2004286063
(43) Date of publication of application: 05.04.2006
(73) Proprietor: HONDA MOTOR CO., LTD., Tokyo (JP)
(72) Inventor: Kushida, Kazumitsu, 4-1, Chuo 1-chome Wako-shi Saitama (JP)
(74) Representative: Rupp, Christian

(56) References cited:
- US-A- 4 560 196
- US-A- 4 632 354
- US-A- 4 673 190

## Description

The present invention relates to a communication means arrangement structure such as an antenna for a small vehicle such as two-wheelers or three-wheelers.

In a motorcycle or the like, since an antenna for communication may intercept a field of view when it is located at the front of a vehicle body, it is generally mounted to a rear portion of the vehicle body (for example, see Patent Document 1).
[Patent Document 1] JP-UM-A-63-91991

The antenna disclosed in Patent Document 1 is provided on a right side portion of a motorcycle behind a seat so as to project upward and rearward with slight obliqueness.
Although not written clearly, since the antenna is adapted to catch electric waves of a wireless communication or electric waves from radio stations having relatively long wavelength, which is low in directivity, these waves are not interfered by a passenger such as a rider or buildings and hence it can be provided behind the passenger seated on the seat so as to project therefrom without any problem.

However, in the case of an antenna for transmitting signals between vehicles for detecting positions of the vehicles with respect to each other, carrier waves in an extremely high-frequency wave band which transmits a large amount of data are transmitted. Therefore, it is high in directivity and hence is interfered by the passenger or buildings.
In the case of electromagnetic wave such as light, it is further interfered by the passenger or buildings.

In particular, when the passenger interferes with the electric wave reception, the range on the passenger side from the antenna becomes an incommunicatable range. Therefore, in order to enable communication in all directions, the antenna must be arranged to a higher position than the passenger, or at least two antennas must be arranged at the front and rear, or the left and right position of the vehicle body.

When arranging the antenna to a higher position, since arrangement at the front, left, and right side of the vehicle body is hindrance, it is arranged at the rear portion of the vehicle body.

Even when the antenna is arranged at the higher position at the rear portion of the vehicle body, since the antenna is located at the rear portion of the vehicle body, the communication range is reduced due to the existence of buildings on the left and right sides, for example, right before the vehicle enters into an intersecting road at a blind corner which is situated in the environment having the buildings on the left and right sides.

US 4, 673, 190 shows a vehicle according to the describing portion of claim 1.

In view of such points, it is an object of the present invention to provide a communication means arrangement structure for small vehicles in which transmission of signals is enabled with a single communication means in all directions without being interfered by a passenger himself/herself, and the communication range of an electromagnetic wave with high directivity which may be affected by environmental conditions can be enlarged as much as possible.

In order to achieve the above-described object, a small vehicle such as two-wheelers or three-wheelers according to Claim 1 of the invention comprises a communication means arrangement structure wherein a pillar member including a vertical stay extending upward from behind a passanger seat of the small vehicle and a horizontal member bent at an upper end of the vertical stay and extending forward is provided and is characterized in that at least one type of communication means for carrying out at least one of sending or receiving of signals is disposed at a front portion of the horizontal member of the communication means arrangement structure above a passenger seated on the seat, wherein the vertical stay includes divided upper and lower vertical stays, and the lower vertical stay and the upper stay are rotatably connected to each other by connecting portions thereof, and the upper stay is integrally formed with the horizontal member in a state of being bentinan L-shape.

In the communication means arrangement structure for small vehicles as stated in Claim 1, the invention according to Claim 2 is characterized in that one of the communication means is an inter-vehicle communication antenna for detecting positions of the vehicles by transmitting signals between the vehicles.

In the communication means arrangement structure of the small vehicle as stated in any one of Claim 1 or Claim 2, the invention according to Claim 3 is characterized in that one of the communication means is a GPS antenna.

>

In the communication means arrangement structure of the small vehicle as stated in any one of Claim 1 to Claim 3, the invention according to Claim 4 is characterized in that one of the communication means is an LED arranged so as to emit light toward the front.

In the communication means arrangement structure of the small vehicle as stated in Claim 4, the invention according to Claim 5 is characterized in that the LED is a white LED or a near-infrared ray LED.

In the communication means arrangement structure of the small vehicle as stated in any one of Claim 1 to Claim 5, the invention according to Claim 6 is characterized in that a rear-surveillance camera is provided on a rear surface of the vertical stay of the pillar member at a predetermined height.

According to the communication means arrangement structure of the small vehicle as stated in Claim 1, since at least one type of the communication means for carrying out at least one of sending or receiving of signals is disposed above the passenger seated on the seat, one communication means for each type is arranged at a high position above the passenger and hence transmission of signals are enabled for all directions without being interfered by the passenger himself/herself. Also, since the communication means is located at a position on the vehicle body as forward as possible above the passenger, the communication range of the electromagnetic wave with high directivity at the intersection in the environment having high buildings on both sides can be enlarged as much as possible.

Furthermore, since the pillar member for supporting the communication means includes the vertical stay extending upward from behind the seat and the horizontal member bent at the upper end of the vertical stay and extending forward, getting on and off of the passenger from both left and right sides are not hindered.

According to the communication means arrangement structure of the small vehicle as stated in Claim 2, the inter-vehicle communication antenna for detecting the positions of the vehicles by transmitting signals between vehicles is disposed above the passenger at the front portion of the horizontal member of the pillar member.

Since carrier waves in an extremely high-frequency wave band which transmits a large amount of data are transmitted from the inter-vehicle communication antenna for detecting the positions of the vehicles by transmitting signals between vehicles, the directivity of the electric wave is high, and hence the buildings are apt to interfere with the electric waves. However, since the inter-vehicle communication antenna is arranged above the passenger at the position of the vehicle body as forward as possible, the communication range of the electromagnetic wave with high directivity at the intersection in the environment having high buildings on both sides can be enlarged as much as possible.

According to the communication means arrangement structure of the small vehicle as stated in Claim 3, since the GPS antenna is disposed above the passenger on the horizontal member of the pillar member, reception of electric waves from satellite is ensured.

According to the communication means arrangement structure of the small vehicle as stated in Claim 4, since the LED is arranged above the passenger so as to face forward, when the car coming from the opposite direction takes an image from the front of the vehicle body by a CCD camera, a C-MOS camera or the like, the LED can be recognized via a monitor at a position higher than the passenger, while when the LED is additionally arranged on the lower portion of the vehicle body, a plurality of LEDs arranged at large distance from each other can easily be recognized from a long distance.

According to the communication means arrangement structure of the small vehicle as stated in Claim 5, when the white LED is used as the LED in Claim 4, since it emits visible light, it is visible by human being and can be taken by the CCD camera or the like and viewed via the monitor.
When the near-infrared ray LED is used as the LED in Claim 4, although it is invisible for human being, it can be taken by the CCD camera or the like and viewed via the monitor.

According to the communication means arrangement structure of the small vehicle as stated in Claim 6, since the rear-surveillance camera is provided on the rear surface of the vertical stay of the pillar member at a predetermined height, the rearward image can be taken from an adequate height, and hence video on the monitor can easily be seen, thereby facilitating recognition of the conditions behind the vehicle body.
Fig. 1 is a general perspective view of a motorcycle, which does not form part of the claimed subject matter.
Fig. 2 is a side view of the same.
Fig. 3 is a front view of the same.
Fig. 4 is a rear view of the same.
Fig. 5 is a schematic plan view of a road where the same motorcycle travels.
Fig. 6 is a general side view of a motorcycle according to the present invention showing the divided vertical stay.

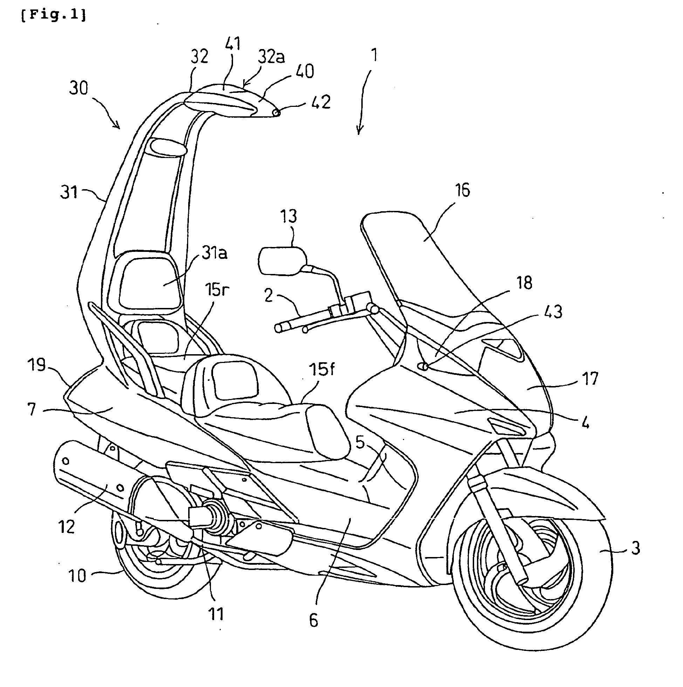

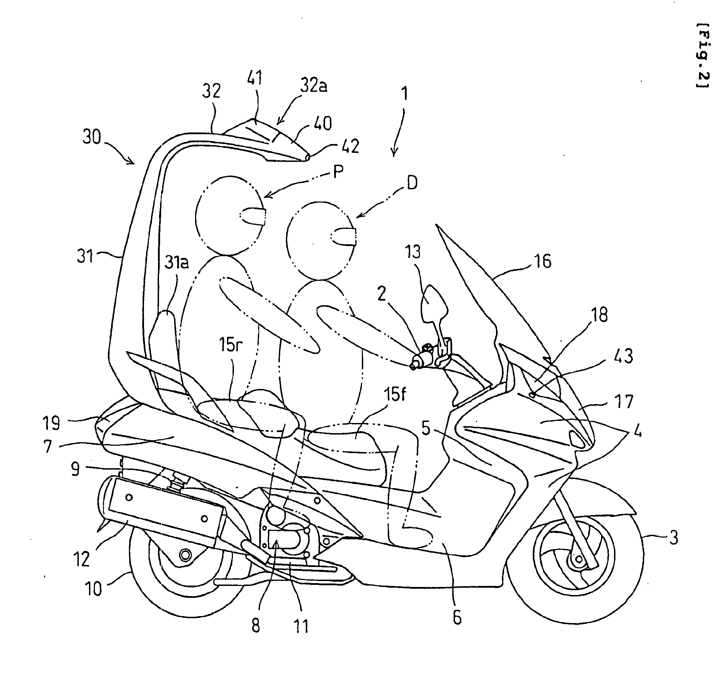

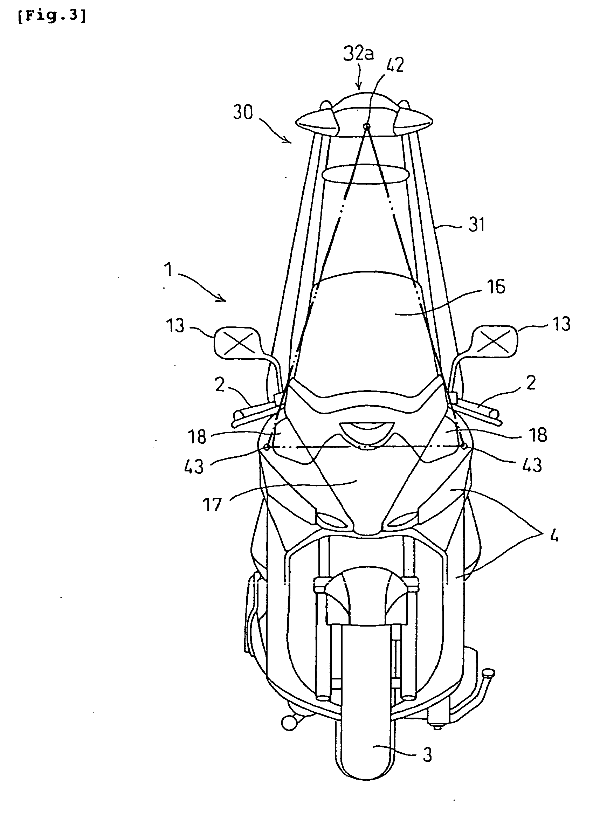

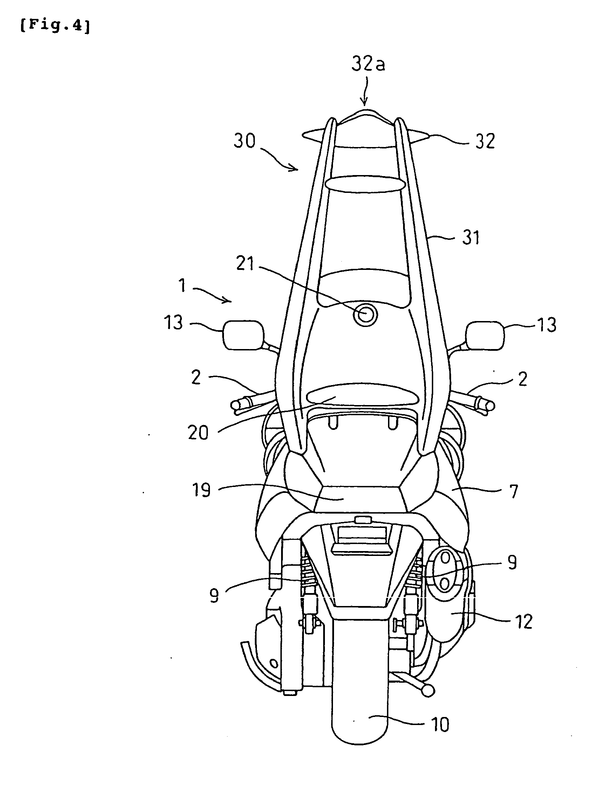

A general perspective view of a motorcycle 1 to which a communication means arrangement structure is applied is shown in Fig. 1, a side view of the same is shown in Fig. 2, the front view of the same is shown in Fig. 3, and the rear view of the same is shown in Fig. 4.

The motorcycle 1 is a two-seater motorcycle and a front cover 4 and a leg shield 5 cover a steering system for steering a front wheel 3 by a handle 2.
A step floor 6 for placing legs extends rearward from a lower portion of the leg shield 5, and a body cover 7 extends further rearward and obliquely upward from the step floor 6.

A swing-type power unit 8 is provided below the body cover 7 so as to be capable of pivotal movement in the vertical direction about a front end thereof, and a rear wheel 10 is journaled behind the power unit 8, mounted to a vehicle body frame with the intermediary of a rear cushion 9.
Provided on a right side of the rear wheel 10 is an exhaust muffler 12 which is in communication with an exhaust pipe 11 extending from an internal combustion engine provided in front of the power unit 8.

A seat including a front seat 15f and a rear seat 15r continuing from the front to the rear side is provided above the body cover 7. A driver D is seated on the front seat 15f and a passenger P is seated on the rear seat 15r.
Fig. 2 shows the driver D and the passenger P seated on the respective seats by chain double-dashed line.

A windscreen 16 extends upward and obliquely rearward from an upper edge of the front cover 4.
A headlight 17 is provided on an upper portion of the front cover 4 extending forward from a center of the windscreen 16, and winker lights 18, 18 are provided behind thereof on left and right sides.

White LEDs 43, 43 are provided on the left and right sides of the winker lights 18, 18 so as to emit light toward the front (see Fig. 3).
Rear view mirrors 13, 13 are mounted at about roots of left and right grips on the handle 2.
A rear combination light 19 is disposed at a rear end of the body cover 7.

A pillar member 30 is provided on a rear portion of the body cover 7 at a position behind the rear seat 15r and above the rear combination light 19 so as to extend upward.
The pillar member 30 includes a vertical stay 31 extending upward from behind the rear seat 15r and a horizontal member 32 bent at an upper end of the vertical stay 31 and extends forward.

Referring now to Fig. 2, a riding space of C-shape in side view is defined by the rear seat 15r and the vertical stay 31 and the horizontal member 32 of the pillar member 30 and the horizontal member 32 is located horizontally at about 180 cm from the ground, which is a height providing a room above the head of the passenger P seated on the rear seat 15r which is slightly higher than the front seat 15f.
Therefore, the driver D as well as the passenger P can get on and off from the side without problem.

The horizontal member 32 is positioned in such a manner that a front end extending forward is located at substantially above the head of the driver D seated on the front seat 15f, and the horizontal member 32 extends forward to substantially a center position of the vehicle body in the fore-and-aft direction.

A lower portion of a front surface of the vertical stay 31 fixed to the vehicle body in a vertical posture serves as a seat back 31a of the passenger P (see Fig. 1).
A rear surface of the vertical stay 31 is provided with a tail lamp 20 at the lower portion thereof as shown in Fig. 4, and a rear-surveillance camera 21 is attached so as to face rearward at a midpoint in height, whereby the rear view can be imaged.

In the pillar member 30 as described above, the horizontal member 32 is formed with a swelled portion 32a swelling upward like a mountain shape at a front half portion thereof, and an inter-vehicle communication antenna 40 is disposed within the swelled portion 32a at a front portion thereof, and a GPS antenna 41 is disposed on top of the swelled portion 32a.
A white LED 42 is provided at a center of a front edge of the horizontal member 32 at a front end of the swelled portion 32a so as to emit light toward the front.

In this manner, one each of the communication means such as the inter-vehicle communication antenna 40, the GPS antenna 41 and the white LED 42 are arranged together in the swelled portion 32a at the front of the horizontal member 32 of the pillar member 30.
Therefore, the inter-vehicle communication antenna 40, the GPS antenna 41, and the white LED 42 are located above the heads of the driver D and the passenger P.

The inter-vehicle communication antenna 40 constitutes part of an inter-vehicle communication system, and since the inter-vehicle communication system detects the positions or types of a plurality of vehicles traveling around the vehicle in question, it must transmit a large amount of data such as identification codes or positional information in a short time.
Therefore, carrier wave in an extremely high-frequency wave band is used as the carrier wave for carrying the large amount of data.

The extremely high-frequency wave has high directivity and hence interferes with the passenger or buildings.
However, since the inter-vehicle communication antenna 40 is disposed on the horizontal member 32 which covers the upper side of the driver D and the passenger P, transmission in all directions is achieved with one inter-vehicle communication antenna 40 without being interfered by the passenger.

In the case of the inter-vehicle communication antenna 40, since the extremely high-frequency wave has high directivity, it sends signals toward the front which is mostly required, and an effective communication range is in the range of about 120 degrees in front.
As regards receiving, since the inter-vehicle communication antenna 40 is located at a position higher than the passenger, all directions are effective.

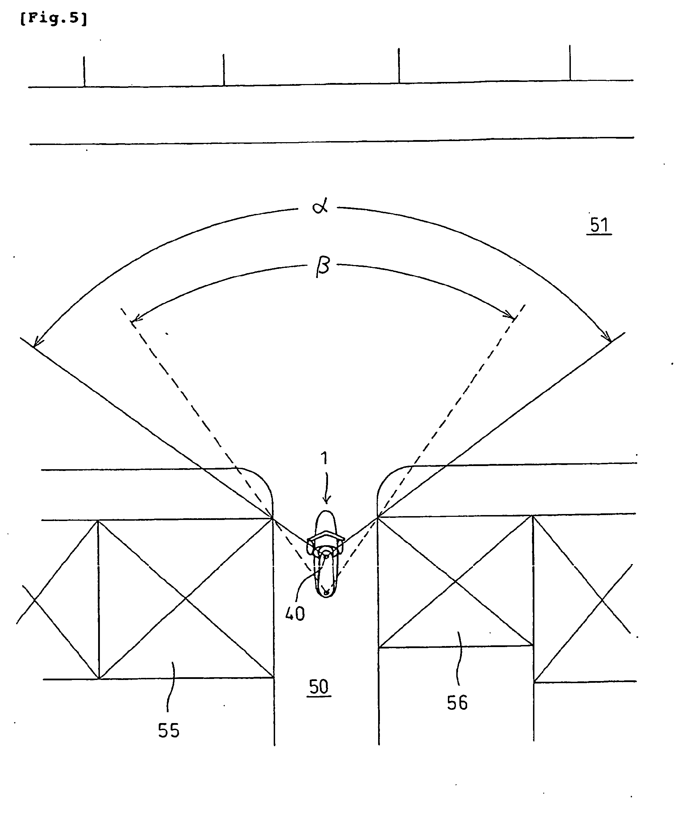

As shown in Fig. 5, when the motorcycle 1 enters a large arterial road 51 from a side road 50, if there are buildings 55, 56 on both sides of the side road 50, the communication range is limited. However, since the inter-vehicle communication antenna 40 is positioned at about the center of the vehicle body in the fore-and-aft direction above the passenger, the secured communication range is the range of fan shape α shown by a solid line in Fig. 5, which is a relatively wide range.

For example, when it is provided on the rear portion of the vehicle body as in the case of the antenna in the related art, even when it is disposed at a position higher than the passenger, the communication range is a narrow range as the fan-shaped range β shown by a broken line in Fig. 5.

In this manner, by positioning the inter-vehicle communication antenna 40 above the passenger to a location near the center of the vehicle body in the fore-and-aft direction, the communication range can be enlarged as much as possible.
If the inter-vehicle communication antenna 40 is located further forward, it enters into the field of view of the driver D and hence may get on the driver D's nerves. Therefore, it is preferable to position the inter-vehicle communication antenna 40 forward to an extent that the field of view of the driver D is kept free of interference thereby.

Since the GPS antenna 41 is disposed on the horizontal member 32 of the pillar member 30 which is located at a position higher than the passenger, reception of the electric waves from the satellite is ensured.

Also, the white LED 42 is positioned at the front end of the horizontal member 32, which is a position higher than the passenger.
As described above, the white LEDs 43, 43 are located on the left and right sides of the winker lights 18, 18 on the front cover 4.

Therefore, when the car coming from the opposite direction takes an image from the front of the vehicle body by a CCD camera, a C-MOS camera or the like, referring to Fig. 3, which is the front view of the vehicle body, the one white LED 42 located at the lateral center of the vehicle body at a position higher than the passenger and the two white LEDs 43, 43 located at the symmetrical position on the outer sides of the left and right winker lights 18, 18 constitute the apexes of a large longitudinally elongated isosceles triangle (shown by chain double-dashed line in Fig. 3), and this isosceles triangle can be checked via the monitor.

In this manner, by identifying the type of the vehicle from the shape (light emitting pattern) constituted as apexes of the plurality of white LEDs from the image information on the monitor, or from the size of the shape, or the condition of deformation thereof, various information on the conditions or the states of the vehicle such as the distance or the direction of travel can be obtained.

The white LEDs 42, 43, 43 arranged on the present motorcycle 1 can provide the information such that it is a motorcycle from the shape of the longitudinally elongated isosceles triangle, and since the upper white LED 42 is located at the position higher than the passenger and the distance from the white LEDs 43, 43 is large, so that they can form a large isosceles triangle. Therefore, the light-emitting pattern can be recognized from a pretty long distance.

The number and arrangement of the white LED may be contemplated in various ways in addition to the example shown above.
For example, they may be mounted to the left and right rear view mirrors 13, 13, respectively.
In any case, by arranging at least one of the white LEDs on the horizontal member 32 of the pillar member 30 which is at the position higher than the passenger, the vertical width of the shape formed by the plurality of white LEDs as apexes can be increased, thereby facilitating the recognition of the shape.

The white LEDs emit visible light, and hence the human being can view directly.
It is also possible to employ near-infrared ray LEDs instead of the white LEDs.
Although the near-infrared ray LED is invisible for the human eyes, it can be recognized by taking an image by the CCD camera or the like and displaying on the monitor.

Since the tale lamp 20 is disposed on the vertical stay 31 of the pillar member 30 at a position higher than the tail lamp at the rear combination light 19 at the rear portion of the body cover 7, visibility is improved by the upper and lower tail lamps.

The rear-surveillance camera 21 is provided at a midpoint of the vertical stay 31 of the pillar member 30 in height, the rear view can be imaged from a suitable height, whereby the image on the monitor can easily be viewed, thereby facilitating recognition of the conditions behind the vehicle body.

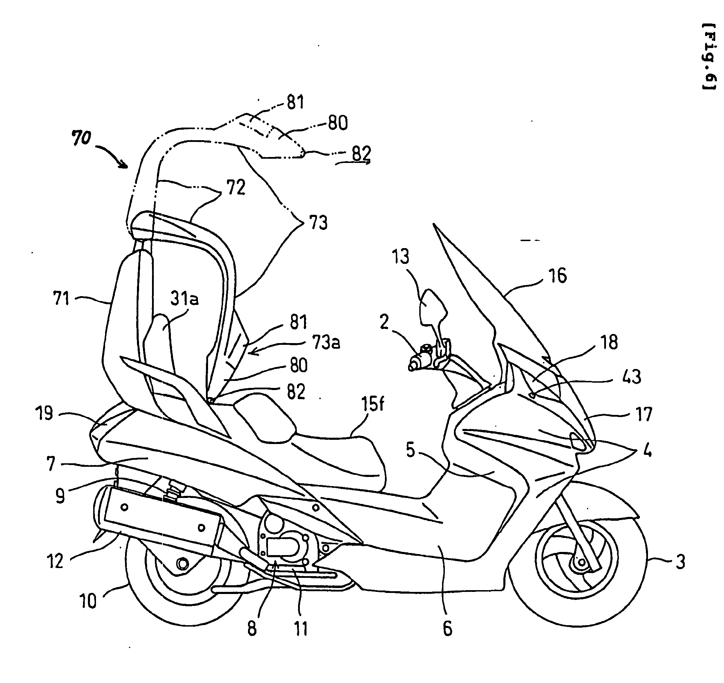

Subsequently, a modification of the pillar member 30 shown in the above-described motorcycle will be illustrated in Fig. 6 and described below.
The members other than a pillar member 70 are the same as those in the above-described motorcycle 1 , and hence the same members are represented by the same reference numerals.

As shown in Fig. 6, the pillar member 70 according to the present invention includes divided upper and lower vertical stays, and the lower vertical stay 71 and the upper stay 72 are rotatably connected to each other by connecting portions thereof. The upper stay 72 is integrally formed with a horizontal member 73 in a state of being bent in an L-shape.
A swelled portion 73a is provided on a front portion of the horizontal member 73, and an inter-vehicle communication antenna 80, a GPS antenna 81, and a white LED 82 are disposed as in the case of the previous embodiment.

A state in which the upper stay 72 is fixed to the lower vertical stay 71, which is integrally secured to the vehicle body frame so as to extend upwardly behind the rear seat 15r, in vertical direction in a posture aligned with the lower vertical stay 71 in a straight line is shown by chain double-dashed line in Fig. 6.
The pillar member 70 in this state is the same as the pillar member 30 in the previous motorcycle, and has the same functions.

The upper stay 72 is fixed to an upper side of the lower vertical stay 71 in a posture extending straight upward. However, when this fixation is released, the upper stay 72 can be pivoted forward together with the horizontal member 73, and as shown by a solid line in Fig. 6, it can be folded on the rear seat 15r into a compact shape.
By folding the upper stay 72 and the horizontal member 73 as described above, required parking space may be reduced.

While the pillar member is adapted to be applied to the motorcycle having no roof in the embodiments shown above, the roof can be utilized in the case of small two-wheel or three-wheel vehicles having the roof. Therefore, it is also possible to support the communication means such as the antenna on the roof, and the communication means may be disposed on the roof above the passenger.

### [Description of Reference Numerals and Signs]

D...driver, P...passenger 1 ... motorcycle, 2...handle, 3...front wheel, 4...front cover, 5...leg shield, 6...step floor, 7...body cover, 8...power unit, 9...rear cushion, 10...rear wheel, 11...exhaust pipe, 12...exhaust muffler, 13...rear view mirror, 15f...front seat, 15r...rear seat, 16...windscreen, 17...headlight, 18...winker light, 19...rear combination light, 20...tail lamp, 21...rear-surveillance camera, 30...pillar member, 31...vertical stay, 32...horizontal member, 40...inter-vehicle communication antenna, 41...GPS antenna, 42, 43...white LED, 50...side road, 51...arterial road, 55, 56...building 70...pillar member, 71...lower vertical stay, 72...upper stay, 73...horizontal member, 80... inter-vehicle communication antenna, 81...GPS antenna, 82...white LED

## Claims

1. A small vehicle such as two-wheelers or three-wheelers, comprising a communication means arrangement structure, wherein a pillar member (70) including a vertical stay (71, 72) extending upward from behind a passenger seat of the small vehicle and a horizontal member (73) bent at an upper end of the vertical stay (72) and extending forward is provided,
**characterised in that**
at least one type of communication means for carrying out at least one of sending or receiving of signals is disposed at a front portion of the horizontal member (73) of the communication means arrangement structure above a passenger (P) seated on the seat,
wherein the vertical stay (71, 72) includes divided upper and lower vertical stays (71, 72), and the lower vertical stay (71) and the upper stay (72) are rotatably connected to each other by connecting portions thereof, and the upper stay (72) is integrally formed with the horizontal member (73) in a state of being bent in an L-shape.

2. The small vehicle according to Claim 1, **characterized in that** one of the communication means is an inter-vehicle communication antenna (80) for detecting positions of the vehicles by transmitting signals between vehicles.

3. The small vehicle according to Claim 1 or Claim 2, **characterized in that** one of the communication means is a GPS antenna (81).

4. The small vehicle according to any one of Claim 1 to Claim 3, **characterized in that** one of the communication means is an LED arranged so as to emit light toward the front.

5. The small vehicle according to Claim 4, **characterized in that** the LED is a white LED (82) or a near-infrared ray LED.

6. The small vehicle according to any one of Claim 1 to Claim 5, **characterized in that** a rear-surveillance camera (21) is provided on a rear surface of the vertical stay (71) of the pillar member (70) at a predetermined height.

## Patentansprüche

1. Kleines Fahrzeug, wie Zweiräder oder Dreiräder, aufweisend eine Kommunikationsmittelanordnungskonstruktion, wobei ein Stützenelement (70) vorgesehen ist, das eine vertikale Strebe (71, 72), die sich von hinterhalb eines Fahrgastsitzes des kleinen Fahrzeugs nach oben erstreckt, und ein horizontales Element (73) umfasst, das an einem oberen Ende der vertikalen Stütze (72) gebogen ist und sich nach vorne erstreckt,
**dadurch gekennzeichnet, dass**
wenigstens eine Art von Kommunikationsmitteln zum Ausführen wenigstens des Sendens oder Empfanges von Signalen an einem vorderen Abschnitt des horizontalen Elements (73) der Kommunikationsmittelanordnungskonstruktion oberhalb eines Fahrgastes (P), der auf dem Sitz sitzt, angeordnet ist,
wobei die vertikale Strebe (71, 72) geteilte obere und untere vertikale Streben (71, 72) umfasst, und die untere vertikale Strebe (71) und die obere vertikale Strebe (72) drehbar miteinander verbunden sind, indem Abschnitte davon verbunden sind, und die obere Strebe (72) einstückig mit dem horizontalen Element (73) gebildet ist, in einem Zustand, in dem sie zu einer L-Form gebogen sind.

2. Kleines Fahrzeug gemäß Anspruch 1, **dadurch gekennzeichnet, dass** eines der Kommunikationsmittel eine Antenne zur Kommunikation zwischen Fahrzeugen (80) ist, um Positionen der Fahrzeuge durch Übertragen von Signalen zwischen den Fahrzeugen zu ermitteln.

3. Kleines Fahrzeug gemäß Anspruch 1 oder 2, **dadurch gekennzeichnet, dass** eines der Kommunikationsmittel eine GPS-Antenne (81) ist.

4. Kleines Fahrzeug gemäß einem der Ansprüche 1 bis 3, **dadurch gekennzeichnet, dass** eines der Kommunikationsmittel eine LED ist, die so angeordnet ist, dass sie Licht in Richtung der Vorderseite imitiert.

5. Kleines Fahrzeug gemäß Anspruch 4, **dadurch gekennzeichnet, dass** die LED eine weiße LED (82) oder eine LED zur Strahlung im nahen Infrarot ist.

6. Kleines Fahrzeug gemäß einem der Ansprüche 1 bis 5, **dadurch gekennzeichnet, dass** eine Kamera zur rückwärtigen Überwachung (21) an einer hinteren Oberfläche der vertikalen Strebe (71) des Stützenelements (70) an einer vorgegebenen Höhe vorgesehen ist.

## Revendications

1. Petit véhicule tel qu'un deux roues ou un trois roues, comprenant une structure d'agencement de moyens de communication, dans lequel un élément de pilier (70) comprenant une jambe de force verticale (71, 72) s'étendant vers le haut depuis l'arrière d'un siège passager du petit véhicule et un élément horizontal (73) plié au niveau d'une extrémité supérieure de la jambe de force verticale (72) et s'étendant vers l'avant est prévu,
**caractérisé en ce que**
au moins un type de moyens de communication pour réaliser au moins l'un parmi l'envoi ou la réception de signaux est disposé au niveau d'une partie avant de l'élément horizontal (73) de la structure d'agencement de moyens de communication au dessus d'un passager (P) assis sur le siège,
dans lequel la jambe de force verticale (71, 72) comprend des jambes de force verticales supérieure et inférieure (71, 72) divisées, et la jambe de force verticale inférieure (71) et la jambe de force supérieure (72) sont raccordées en rotation entre elles en raccordant leurs parties, et la jambe de force supérieure (72) est formée de manière solidaire avec l'élément horizontal (73) selon un état dans lequel il est plié selon une forme de L.

2. Petit véhicule selon la revendication 1, **caractérisé en ce que** l'un des moyens de communication est une antenne de communication entre véhicules (80) pour détecter des positions des véhicules en transmettant des signaux entre les véhicules.

3. Petit véhicule selon la revendication 1 ou la revendication 2, **caractérisé en ce que** l'un des moyens de communication est une antenne GPS (81).

4. Petit véhicule selon l'une ou quelconque des revendications 1 à 3, **caractérisé en ce que** l'un des moyens de communication est une diode électroluminescente agencée afin d'émettre de la lumière vers l'avant.

5. Petit véhicule selon la revendication 4, **caractérisé en ce que** la diode électroluminescente est une diode électroluminescente blanche (82) ou une diode électroluminescente proche de l'infrarouge.

6. Petit véhicule selon l'une ou quelconque des revendications 1 à 5, **caractérisé en ce qu'**une caméra de surveillance arrière (21) est prévue sur une surface arrière de la jambe de force verticale (71) de l'élément de pilier (70) à une hauteur prédéterminée.
